# EUROPEAN PATENT APPLICATION

(11) **EP 4 583 265 A1**
(43) Date of publication of application: **09.07.2025**
(21) Application number: 23876707.3
(22) Date of filing: 10.10.2023
(51) Int. Cl.: H01M 50/105, H01M 50/126, H01M 50/183, H01M 50/531, H01M 10/0525

(54) **PACKAGING BAG, ELECTROCHEMICAL APPARATUS, AND ELECTRONIC DEVICE**

(30) Priority: 13.10.2022 CN 202211253187
(71) Applicant: Ningde Amperex Technology Limited, Ningde, Fujian 352100 (CN)
(72) Inventor: QU, Qiong, Ningde, Fujian 352100 (CN); LIN, Sen, Ningde, Fujian 352100 (CN)
(74) Representative: Icosa
(86) International application number: PCT/CN2023/123815
(87) International publication number: WO 2024/078505

(57) **Abstract**

This application relates to a pouch, an electrochemical device, and an electronic device. The pouch includes a first pouch body and a second pouch body connected to each other. A first cavity is recessed in the first pouch body. The second pouch body covers the first cavity so that the first pouch body and the second pouch body jointly close around to form the accommodation cavity. The first pouch body includes a first wall portion oriented toward the second pouch body. The first wall portion includes a first wall face oriented toward the accommodation cavity and a third wall face oriented away from the accommodation cavity. A thickness of the first wall portion is H1. The second pouch body includes a second wall portion oriented toward the first pouch body. The second wall portion includes a second wall face oriented toward the accommodation cavity and a fourth wall face oriented away from the accommodation cavity. A thickness of the second wall portion is H2, satisfying: H2 < H1. The thickness H2 of the second wall portion is set to be less than the thickness H1 of the first wall portion, and the first cavity is created in the relatively thick first pouch body by stamping, thereby not only meeting the requirement on the indentation capability of the pouch, but also increasing the accommodation space of the accommodation cavity, and improving the capacity and energy density of the electrochemical device.

## Description

### CROSS-REFERENCE TO RELATED APPLICATIONS

This application claims priority to Chinese Patent Application No. 202211253187.7, filed with the Chinese Patent Office on October 13, 2022 and entitled "POUCH, ELECTROCHEMICAL DEVICE, AND ELECTRONIC DEVICE", which is incorporated herein by reference in its entirety.

### TECHNICAL FIELD

This application relates to the technical field of electrochemical devices, and in particular, to a pouch, an electrochemical device, and an electronic device.

### BACKGROUND

With the development of science and technology, consumer electronic products such as mobile phones and laptops are highly favored by people. As a core component of the electronic products, a lithium-ion battery (electrochemical device) has become a component critical to the development of electronic products by virtue of advantages such as a high operating voltage and a long service life.

The lithium-ion battery typically includes a pouch and a bare cell. During assembling, an indentation needs to be formed in the pouch so that the bare cell can be placed in the pouch. In order to ensure the capability of forming the indentation, the pouch is usually thick, thereby directly impairing the energy density of lithium-ion battery.

### SUMMARY

An objective of this application is to provide an electrochemical device and an electronic device to at least alleviate the technical problem of insufficiency of the energy density of the electrochemical device.

According to a first aspect of this application, a pouch is provided. The pouch closes around to form an accommodation cavity. The pouch includes a first pouch body and a second pouch body connected to each other. A first cavity is recessed in the first pouch body. The second pouch body covers the first cavity so that the first pouch body and the second pouch body jointly close around to form the accommodation cavity. The first pouch body includes a first wall portion oriented toward the second pouch body. The first wall portion includes a first wall face oriented toward the accommodation cavity and a third wall face oriented away from the accommodation cavity. A thickness of the first wall portion is H1 along a direction from the third wall face to the first wall face. The second pouch body includes a second wall portion oriented toward the first pouch body, the second wall portion includes a second wall face oriented toward the accommodation cavity and a fourth wall face oriented away from the accommodation cavity, and a thickness of the second wall portion is H2 along a direction from the second wall face to the fourth wall face, satisfying: H2 < H1.

In an embodiment of this application, the thickness H2 of the second wall portion is set to be less than the thickness H1 of the first wall portion, and the first cavity is created in the relatively thick first pouch body by stamping, thereby not only meeting the requirement on the indentation capability of the pouch, but also increasing the accommodation space of the accommodation cavity. In this way, the accommodation cavity can accommodate an electrode assembly of a larger size and a larger amount of electrolyte solution, so as to increase the capacity and energy density of the electrochemical device. Alternatively, because the thickness H2 of the second wall portion is less than the thickness H1 of the first wall portion, the arrangement in this embodiment can directly reduce the outline dimensions of the pouch to meet the miniaturization and high-energy-density requirements of the electrochemical device.

According to some embodiments of this application, the first wall portion includes a first sealing layer, a first metal layer, and a first protection layer disposed sequentially along a direction from the first wall face to the third wall face, and a thickness of the first sealing layer is t1. the second wall portion includes a second sealing layer, a second metal layer, and a second protection layer disposed sequentially along a direction from the second wall face to the fourth wall face, and a thickness of the second sealing layer is t2, satisfying: t2 < t1. The thickness t2 of the second sealing layer is less than the thickness t1 of the first sealing layer, and the second wall portion can be formed on the basis of the first wall portion by thinning the second sealing layer, so that the thickness of the second wall portion is less than the thickness of the first wall portion, thereby increasing the accommodation space of the accommodation cavity.

According to some embodiments of this application, the thicknesses satisfy t2 = (0.2 to 0.8) × t1. The thicknesses falling within the specified range can ensure the hermeticity of the second sealing layer while increasing the accommodation space of the accommodation cavity.

According to some embodiments of this application, the first protection layer is connected to the second protection layer. The first metal layer is connected to the second metal layer. The first sealing layer is connected to the second sealing layer.

A junction between the first sealing layer and the second sealing layer satisfies one of the following conditions:
(a) the junction is in a step shape descending from the first sealing layer toward the second sealing layer;
(b) the junction is in a slope shape descending from the first sealing layer toward the second sealing layer; or
(c) the junction is in an arc shape that connects the first sealing layer and the second sealing layer.

The fact that the junction is in the step shape, slope shape, or arc shape causes the junction to take up a relatively small space, and reduces the interference caused by the junction to the electrode assembly.

According to some embodiments of this application, the first pouch body includes a first extension portion obtained by extending the first pouch body from one end of the first wall portion toward the second pouch body. The first extension portion is connected to a surface of the second wall portion, the surface being away from the accommodation cavity. The junction between the first pouch body and the second pouch body is disposed directly on the outer surface without taking up additional space in the accommodation cavity, thereby ensuring a large capacity of the accommodation cavity.

According to some embodiments of this application, at an end of the second wall portion, the end being close to the first extension portion, a length of the second protection layer is less than a length of the second metal layer, and a first notch is formed at an end of the second wall portion by the second metal layer and the second protection layer jointly. The first extension portion extends to the first notch, and, at the first notch, the first sealing layer of the first extension portion is connected to the second metal layer of the second wall portion in a stacked manner.

Further, at the first notch, along a direction from the first sealing layer to the second protection layer: a width of the stacked connection between the first sealing layer and the second metal layer is W1, satisfying: W1 ≤ 1.2 mm. The width of the stacked connection between the second metal layer and the first sealing layer is relatively small, so that the space occupied by the first metal layer and the first protection layer at the junction is relatively small, thereby meeting the miniaturization requirement of the electrochemical device 100.

A width of the first notch is W2, satisfying: W2 = W1 + (0.5 to 1) mm. The width W2 of the first notch is greater than the width W1 of the stacked connection, so that a sufficient space is reserved for stacking the second metal layer and the first sealing layer, thereby facilitating the stacked connection between the second metal layer and the first sealing layer.

The accommodation cavity of the pouch is configured to accommodate an electrode assembly. In a state in which the electrode assembly is accommodated in the pouch, a clearance exists between the first extension portion and the electrode assembly. A width of the clearance is W3, satisfying: W2 ≤ W3. The junction is located on a surface of the second wall portion, the surface is away from the accommodation cavity, and, the width W2 of the first notch is less than the width W3 of the clearance, so that the thickness-changed region is located in the clearance between the first extension portion and the electrode assembly without additionally increasing the thickness of the electrochemical device.

According to some embodiments of this application, the accommodation cavity of the pouch is configured to accommodate the electrode assembly, and a tab is connected to the electrode assembly. The first pouch body includes a first extension portion obtained by extending the first pouch body from one end of the first wall portion toward the second pouch body, and the second pouch body includes a second extension portion obtained by extending the second pouch body from one end of the second wall portion toward the first pouch body. Both the first extension portion and the second extension portion extend to a side of the electrode assembly, the side being away from the tab; and, the first extension portion is connected to the second extension portion on the side of the electrode assembly, the side being away from the tab. The first extension portion is connected to the second extension portion on a side of the electrode assembly, the side is away from the tab, and the thickness-changed region at the junction is located in the clearance, thereby preventing the thickness-changed region from taking up additional space in the electrode assembly and reducing the interference caused by the thickness-changed region to the electrode assembly.

According to some embodiments of this application, a second cavity is recessed in the second pouch body. The second cavity communicates with the first cavity to form the accommodation cavity, thereby increasing the accommodation space of the accommodation cavity. Along the direction from the first pouch body to the second pouch body, the depth of the second cavity is less than the depth of the first cavity, and the second cavity is relatively shallow, thereby ensuring sufficient capability of the second pouch body to form an indentation.

According to a second aspect, an embodiment of this application further discloses an electrochemical device. The electrochemical device includes the pouch according to any one of the foregoing embodiments.

According to a third aspect, an embodiment of this application further provides an electronic device. The electronic device includes the electrochemical device according to any one of the embodiments of the first aspect.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings.
FIG. 1 is a schematic structural diagram of an electrochemical device according to some embodiments of this application;
FIG. 2 is an exploded view of an electrochemical device according to some embodiments of this application;
FIG. 3 is a partial cross-sectional view of FIG. 1 sectioned along an A-A line (without an electrode assembly);
FIG. 4 is a schematic structural diagram of a first pouch body before an indentation is formed in the first pouch body according to some embodiments of this application;
FIG. 5 is an exploded view of a pouch according to some embodiments of this application;
FIG. 6 is a partial cross-sectional view of a pouch according to some embodiments of this application;
FIG. 7 is a schematic diagram of a junction B between different structures according to some embodiments of this application;
FIG. 8 is a cross-sectional view of an electrochemical device according to some embodiments of this application;
FIG. 9 is a partial cross-sectional view of an electrochemical device according to some embodiments of this application; and
FIG. 10 is a partial schematic structural diagram of a second wall portion according to some embodiments of this application.

### List of reference numerals:

100. electrochemical device;
10. pouch;
11. first pouch body; 111. first cavity; 112. first wall portion; 112a. first wall face; 112b. third wall face; 1121. first sealing layer; 1122. first metal layer; 1123. first protection layer; 113. middle portion; 114. first extension portion;
12. second pouch body; 121. second wall portion; 121a. second wall face; 121b. fourth wall face; 1211. second sealing layer; 1212. second metal layer; 1213. second protection layer; 122. second cavity; 123. second extension portion; 124. first notch;
13. accommodation cavity; 131. clearance;
20. electrode assembly;
21: tab.

### DETAILED DESCRIPTION OF EMBODIMENTS

For ease of understanding this application, the following describes this application in more detail with reference to drawings and specific embodiments. An element referred to herein as "connected to" another element may be connected to the other element directly or with one or more elements in between. The terms "up", "down", "left", "right", and other similar expressions used herein are merely for ease of description.

In the description of the embodiments of this application, the technical terms "first" and "second" are merely intended to distinguish between different items but not intended to indicate or imply relative importance or implicitly specify the number of the indicated technical features, specific order, or order of precedence.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. In addition, to the extent that no mutual conflict occurs, the technical features described below in different embodiments of this application may be combined with each other.

Unless otherwise defined, all technical and scientific terms used herein bear the same meanings as what is normally understood by a person skilled in the technical field of this application. The terms used in the specification of this application are merely intended to describe specific embodiments but not to limit this application.

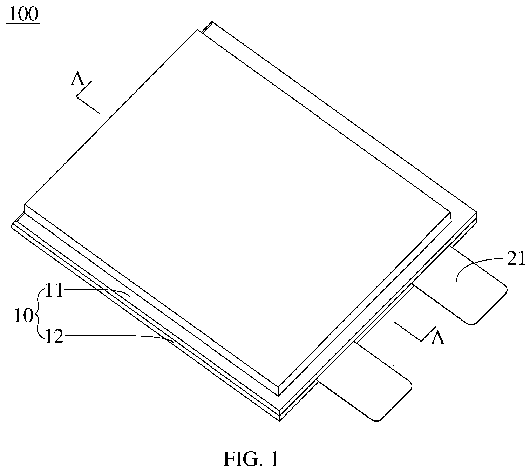

According to a first aspect, an embodiment of this application discloses a pouch 10 configured to package an electrode assembly 20 and an electrolyte solution of an electrochemical device 100. Referring to FIG. 1 to FIG. 3, the pouch 10 includes a first pouch body 11 and a second pouch body 12 connected to each other. The second pouch body 12 is disposed toward the first pouch body 11. The first pouch body 11 and the second pouch body 12 jointly close around to form an accommodation cavity 13. Both the electrode assembly 20 and the electrolyte solution (not shown in the drawings) of the electrochemical device 100 may be accommodated in the accommodation cavity 13.

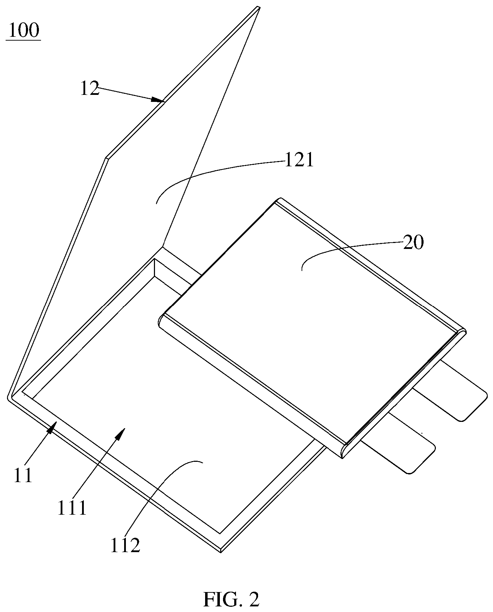

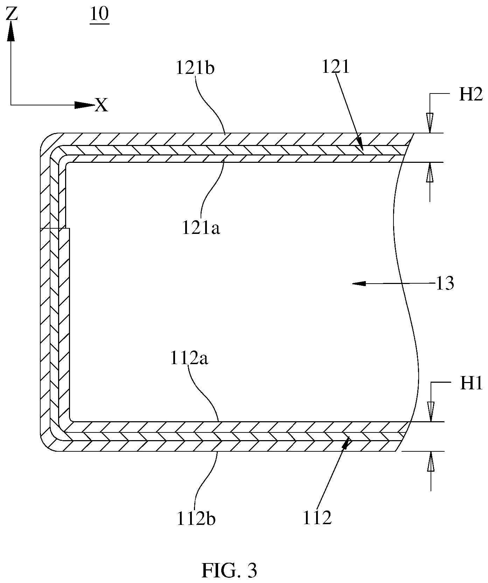

For the first pouch body 11, referring to FIG. 1 and FIG. 2, a first cavity 111 is created in the first pouch body 11. The first cavity 111 may be created in the first pouch body 11 by stamping. The shape of the first cavity 111 may be a circle, a square, a polygon, or the like, and may be set in line with the shape of the electrode assembly 20. Taking a square first cavity 111 as an example, after the first cavity 111 is created by stamping, the first pouch body 11 includes five sidewalls (not shown in the drawings). The five sidewalls jointly close around to form the first cavity 111. The five sidewalls include a first wall portion 112 (that is, the bottom wall of the first cavity 111) oriented toward the second pouch body 12. The remaining four sidewalls close around and are connected to the first wall portion 112. Referring to FIG. 3, the first wall portion 112 includes a first wall face 112a oriented toward the accommodation cavity 13 and a third wall face 112b oriented away from the accommodation cavity 13. The thickness of the first wall portion 112 is H1 along a direction from the third wall face 112b to the first wall face 112a (first direction Z).

Optionally, before the first cavity 111 is created by stamping, the first pouch body 11 may be in the shape of a flat plate, and is basically consistent in thickness in different parts. After the first cavity 111 is created by stamping, the thickness of the first wall portion 112 and the thicknesses of the other four sidewalls (the thickness in a direction from the inner surface to the outer surface of each sidewall) are still basically consistent (due to the stamping, the thicknesses of the other four sidewalls may be slightly less than the thickness of the first wall portion 112). This structure ensures a relatively high capability of the first pouch body 11 to form an indentation. The relatively high capability to form an indentation means that the structure is still strong and not prone to deform after an indentation is created in the structure.

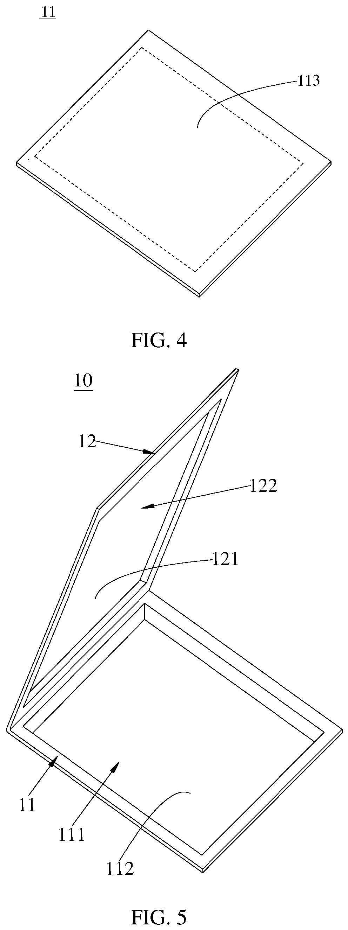

Alternatively, referring to FIG. 2 and FIG. 4, FIG. 2 shows a structure of a first pouch body in which a first cavity is created by stamping, and FIG. 4 shows a structure of a first pouch body 11 in which no first cavity 111 is created by stamping. Before the first cavity 111 is created by stamping, the middle part 113 (the part within the dashed line in FIG. 4) of the first pouch body 11 is thin. After the first cavity 111 is created by stamping, the thin middle part 113 forms a bottom wall of the first cavity 111, that is, forms the first wall portion 112. At this time, the thickness of the first wall portion 112 is less than the thickness of each of the other four side walls. Because the first wall portion 112 is not a part indented directly, the edge of the middle part 113 (the first wall portion 112) of the first pouch body 11 may be stamped. The small thickness of the first wall portion 112 can increase the accommodation space of the first cavity 111. The thicknesses of the other four sidewalls are relatively large, thereby ensuring a high capability of the first pouch body 11 to form an indentation.

For the second pouch body 12, referring to FIG. 2 and FIG. 3, the second pouch body 12 is connected to the first pouch body 11, and the second pouch body 12 covers the first cavity 111, so that the first pouch body 11 and the second pouch body 12 jointly close around to form the accommodation cavity 13. The second pouch body 12 includes a second wall portion 121 oriented toward the first pouch body 11. The second wall portion 121 includes a second wall face 121a oriented toward the accommodation cavity 13 and a fourth wall face 121b oriented away from the accommodation cavity 13. A thickness of the second wall portion 121 is H2 along a direction (first direction Z) from the second wall face 121a to the fourth wall face 121b, satisfying: H2 < H1. In this embodiment, the thickness H2 of the second wall portion 121 is set to be less than the thickness H1 of the first wall portion 112, thereby increasing the accommodation space of the accommodation cavity 13. In this way, the accommodation cavity 13 can accommodate an electrode assembly 20 of a larger size and a larger amount of electrolyte solution, so as to meet the requirements of the electrochemical device 100 on a high capacity and a high energy density. Alternatively, because the thickness H2 of the second wall portion 121 is less than the thickness H1 of the first wall portion 112, the arrangement in this embodiment can directly reduce the outline dimensions of the pouch 10 to meet the miniaturization and high-energy-density requirements of the electrochemical device 100.

Optionally, because the thickness H2 of the second wall portion 121 is less than the thickness H1 of the first wall portion 112, in order to ensure sufficient overall strength of the pouch 10, no indentation needs to be formed in the second wall portion 121. For example, the second pouch body 12 is in the shape of a flat plate, the thicknesses of the second pouch body in different parts are basically consistent, the second pouch body 12 is directly connected to the first pouch body 11, and the second pouch body 12 covers the first cavity 111. The accommodation space of the first cavity 111 is equal to the accommodation space of the accommodation cavity 13.

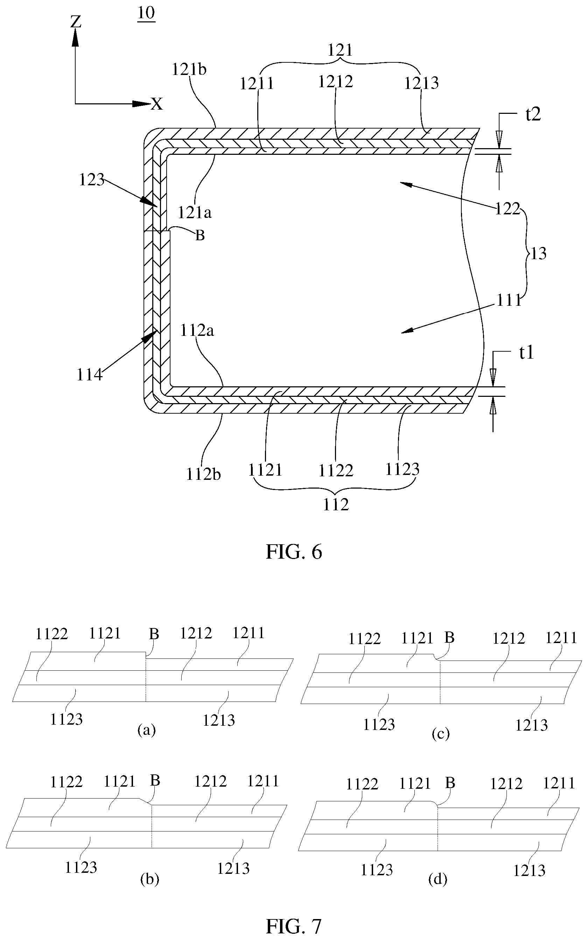

For another example, referring to FIG. 5 and FIG. 6, a second cavity 122 is created in the second pouch body 12. After the second pouch body 12 covers the first cavity 111, the second cavity 122 communicates with the first cavity 111 to form the accommodation cavity 13, thereby increasing the accommodation space of the accommodation cavity 13. However, in order to sufficient strength of the second pouch body 12, along the direction (the first direction Z) from the first pouch body 11 to the second pouch body 12, the depth of the second cavity 122 is less than the depth of the first cavity 111, and the second cavity 122 is relatively shallow, thereby ensuring sufficient capability of the second pouch body 12 to form an indentation. Alternatively, the middle part (not shown in the drawings) of the second pouch body 12 is relatively thin. After the second cavity 122 is created by stamping, the middle part of the second pouch body 12 forms a second wall portion 121 oriented toward the first pouch body 11, thereby further increasing the accommodation space of the accommodation cavity 13. Understandably, if the size of the accommodation space of the accommodation cavity 13 remains unchanged, by thinning the second wall portion 121, the overall size of the pouch 10 can be reduced, thereby meeting the miniaturization requirement of the electrochemical device 100.

In some embodiments, referring to FIG. 6, along the direction from the first wall face 112a to the third wall face 112b (a direction opposite to the first direction Z), the first wall portion 112 includes a first sealing layer 1121, a first metal layer 1122, and a first protection layer 1123 disposed sequentially. The first sealing layer 1121, the first metal layer 1122, and the first protection layer 1123 may be stacked and bonded to each other by an adhesive. The thickness of the first sealing layer 1121 is t1. Along a direction (the first direction Z) from the second wall face 121a to the fourth wall face 121b, the second wall portion 121 includes a second sealing layer 1211, a second metal layer 1212, and a second protection layer 1213 disposed sequentially. The second sealing layer 1211, the second metal layer 1212, and the second protection layer 1213 may be stacked and bonded to each other by an adhesive. The thickness of the second sealing layer 1211 is t2, satisfying: t2 < t1.

Both the first protection layer 1123 and the second protection layer 1213 may be made of nylon, which is an inert material that is relatively tough. The protection layer disposed on the outermost side not only protects the metal layer, but also isolates the metal layer from external moisture. Both the first metal layer 1122 and the second metal layer 1212 may be made of aluminum or stainless steel. Both metal layers (1122, 1212) are relatively dense, thereby not only ensuring sufficient strength of the pouch 10, but also playing a role of moisture isolation to ensure hermeticity of the pouch 10. Both the first sealing layer 1121 and the second sealing layer 1211 may be made of a polypropylene material to isolate the metal layers from the electrode assembly 20 and the electrolyte solution in the accommodation cavity 13. The first protection layer 1123 and the second protection layer 1213 are of the same thickness, and the first metal layer 1122 and the second metal layer 1212 are of the same thickness. Optionally, the second protection layer 1213 is obtained by extending the first protection layer 1123, and the second metal layer 1212 is obtained by extending the first metal layer 1122. In other words, the second protection layer 1213 is continuous with the first protection layer 1123 (no junction exists between the second protection layer 1213 and the first protection layer 1123). The second metal layer 1212 is continuous with the first metal layer 1122 (no junction exists between the second metal layer 1212 and the first metal layer 1122). The thickness t2 of the second sealing layer 1211 is less than the thickness t1 of the first sealing layer 1121, and the second wall portion 121 can be formed on the basis of the first wall portion 112 by thinning the second sealing layer 1211, so that the thickness of the second wall portion 121 is less than the thickness of the first wall portion 112, thereby increasing the accommodation space of the accommodation cavity 13.

Further, the thicknesses satisfy t2 = (0.2 to 0.8) × t1. The thicknesses falling within the specified range can ensure the hermeticity of the second sealing layer 1211 while increasing the accommodation space of the accommodation cavity 13.

In some embodiments, the first pouch body 11 may be connected to the second pouch body 12 by an adhesive or by heat-sealing, so as to form a complete pouch 10. For example, the first protection layer 1123 of the first wall portion 112 is connected to the second protection layer 1213 of the second wall portion 121, the first metal layer 1122 is connected to the second metal layer 1212, and the first sealing layer 1121 is connected to the second sealing layer 1211.

Specifically, referring to FIG. 6, the first pouch body 11 includes a first extension portion 114 obtained by extending the first pouch body from one end of the first wall portion 112 toward the second pouch body 12, and the second pouch body 12 includes a second extension portion 123 obtained by extending the second pouch body from one end of the second wall portion 121 toward the first pouch body 11. Because the first extension portion 114 is obtained by extending the first pouch body from the first wall portion 112, the first extension portion 114 may be considered to be a part of the first wall portion 112. Therefore, the first extension portion 114 also includes the first sealing layer 1121, the first metal layer 1122, and the first protection layer 1123. Similarly, the second extension portion 123 may be considered to be a part of the second wall portion 121. Therefore, the second extension portion 123 includes the second sealing layer 1211, the second metal layer 1212, and the second protection layer 1213. The first protection layer 1123 of the first extension portion 114 is connected to the second protection layer 1213 of the second extension portion 123. The first metal layer 1122 of the first extension portion 114 is connected to the second metal layer 1212 of the second extension portion 123. The first sealing layer 1121 of the first extension portion 114 is connected to the second sealing layer 1211 of the second extension portion 123.

To facilitate the positioning and connection of the first pouch body 11 and the second pouch body 12, an obvious color difference is required at the junction B between the first pouch body 11 and the second pouch body 12. An obvious color difference may be set between the first extension portion 114 and the second extension portion 123, for example, by adding a color powder onto the first extension portion 114 or the second extension portion 123, or by adding different color powders onto the first extension portion 114 and the second extension portion 123 respectively.

Due to the thickness difference between the first sealing layer 1121 and the second sealing layer 1211, the junction B between the first sealing layer 1121 and the second sealing layer 1211 assumes a rugged shape in the accommodation cavity 13. In order to minimize interference caused by the junction B to the electrode assembly 20 in the accommodation cavity 13, in some embodiments, referring to (a), (b), (c), and (d) in FIG. 7, the junction B is in a step shape descending from the first sealing layer 1121 toward the second sealing layer 1211; or, the junction B is in a slope shape descending from the first sealing layer 1121 toward the second sealing layer 1211; or, the junction B is in an arc shape that connects the first sealing layer 1121 and the second sealing layer 1211. The fact that the junction B is in the step shape, slope shape, or arc shape causes the junction B to take up a relatively small space, and reduces the interference caused by the junction B to the electrode assembly 20.

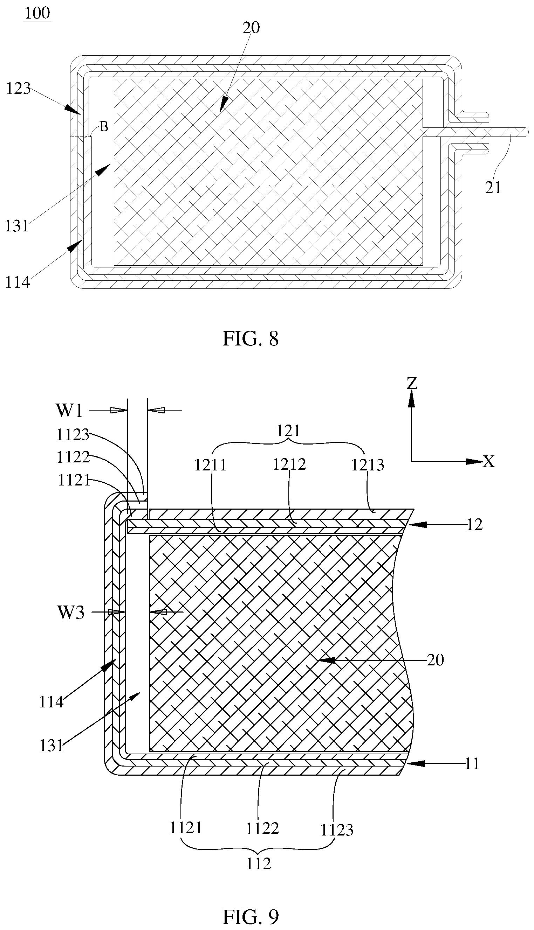

Further, referring to FIG. 8, a tab 21 is connected to the electrode assembly 20. In a state in which the electrode assembly 20 is accommodated in the accommodation cavity 13, both the first extension portion 114 and the second extension portion 123 extend to a side of the electrode assembly 20, the side being away from the tab 21; and, the first extension portion 114 is connected to the second extension portion 123 on the side of the electrode assembly 20, the side being away from the tab 21. A clearance 131 exists between the first extension portion 114 and the electrode assembly 20, and exists between the second extension portion 123 and the electrode assembly. The clearance 131 is configured to accommodate an electrolyte solution. In these embodiments, the first extension portion 114 is connected to the second extension portion 123 on a side of the electrode assembly 20, the side is away from the tab 21, and the thickness-changed region at the junction B is located in the clearance 131, thereby preventing the thickness-changed region from taking up additional space in the electrode assembly 20 and reducing the interference caused by the thickness-changed region to the electrode assembly 20.

In some other embodiments, referring to FIG. 9, the second pouch body 12 is in the shape of a flat plate. The first pouch body 11 includes a first extension portion 114 obtained by extending the first pouch body from one end of the first wall portion 112 toward the second pouch body 12. The first extension portion 114 is connected to a surface of the second wall portion 121, the surface being away from the accommodation cavity 13. In these embodiments, the junction between the first pouch body 11 and the second pouch body 12 is disposed directly on the outer surface without taking up additional space in the accommodation cavity 13, thereby ensuring a large capacity of the accommodation cavity 13.

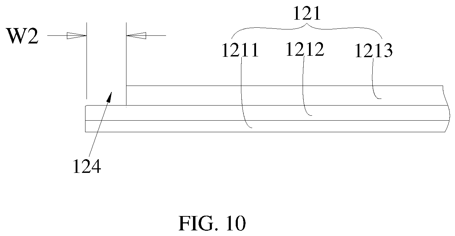

Specifically, referring to FIG. 9 and FIG. 10, at an end of the second wall portion 121, the end being close to the first extension portion 114, a length of the second protection layer 1213 is less than a length of the second metal layer 1212, and a first notch 124 is formed at an end of the second wall portion 121 (an end close to the first extension portion 114) by the second metal layer 1212 and the second protection layer 1213 jointly. The first extension portion 114 may extend from the first wall portion 112 to the first notch 124. In addition, at the first notch 124, the first sealing layer 1121 of the first extension portion 114 is connected to the second metal layer 1212 of the second wall portion 121 in a stacked manner.

A part of the second pouch body 12, which is close to the first extension portion 114, may be stripped of the second protection layer 1213 by laser cleaning or other means, so that the length of the second protection layer 1213 is less than the length of the second metal layer 1212, thereby forming a first notch 124. At the first notch 124, along a direction (second direction X) from the first sealing layer 1121 to the second protection layer 1213: a width of the stacked connection between the first sealing layer 1121 and the second metal layer 1212 is W1, satisfying: W1 ≤ 1.2 mm. The width of the stacked connection between the second metal layer 1212 and the first sealing layer 1121 is relatively small, so that the space occupied by the first metal layer 1122 and the first protection layer 1123 at the junction is relatively small, thereby meeting the miniaturization requirement of the electrochemical device 100.

The width of the removed part of the first pouch body 11 is W2, that is, the width of the first notch 124 is W2, satisfying: W2 = W1 + (0.5 to 1) mm. The width W2 of the first notch 124 is greater than the width W1 of the stacked connection, so that a sufficient space is reserved for stacking the second metal layer 1212 and the first sealing layer 1121, thereby facilitating the stacked connection between the second metal layer 1212 and the first sealing layer 1121. The connection manner may be bonding, heat-sealing, or the like to achieve a good effect of moisture isolation.

In addition, in a state in which the electrode assembly 20 is accommodated in the accommodation cavity 13, a clearance 131 exists between the first extension portion 114 and the electrode assembly 20, and a width of the clearance 131 is W3, satisfying: W2 ≤ W3. In an embodiment of this application, the junction is located on a surface of the second wall portion 121, the surface is away from the accommodation cavity 13, and, the width W2 of the first notch 124 is less than the width W3 of the clearance 131, so that the thickness-changed region is located in the clearance 131 between the first extension portion 114 and the electrode assembly 20 without additionally increasing the thickness of the electrochemical device 100.

In an embodiment of this application, the thickness H2 of the second wall portion 121 is set to be less than the thickness H1 of the first wall portion 112, and the first cavity 111 is created in the relatively thick first pouch body 11 by stamping, thereby not only meeting the requirement on the indentation capability of the pouch 10, but also increasing the accommodation space of the accommodation cavity 13. In this way, the accommodation cavity 13 can accommodate an electrode assembly 20 of a larger size and a larger amount of electrolyte solution, so as to increase the capacity and energy density of the electrochemical device 100. Alternatively, because the thickness H2 of the second wall portion 121 is less than the thickness H1 of the first wall portion 112, the arrangement in this embodiment can directly reduce the outline dimensions of the pouch 10 to meet the miniaturization and high-energy-density requirements of the electrochemical device 100.

According to a second aspect, an embodiment of this application discloses an electrochemical device 100. Referring to FIG. 1, FIG. 2, and FIG. 8, the electrochemical device 100 includes the pouch 10 according to any one of the foregoing embodiments, an electrode assembly 20, and an electrolyte solution (not shown in the drawings). Both the electrode assembly 20 and the electrolyte solution are accommodated in the accommodation cavity 13 of the pouch 10. A tab 21 is disposed on the electrode assembly 20. The tab 21 protrudes out of the pouch 10 from between the first pouch body 11 and the second pouch body 12, so as to lead out a positive electrode and a negative electrode of the electrode assembly 20. It is hereby noted that, in this embodiment of this application, the electrochemical device 100 is a smallest unit that makes up a battery or a battery module, and is a site for conversion between electrical energy and chemical energy.

According to a third aspect, an embodiment of this application further discloses an electronic device. The electronic device includes the electrochemical device 100 according to any one of the foregoing embodiments. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. A pouch, configured to package an electrode assembly, wherein the pouch closes around to form an accommodation cavity, **characterized in that** the pouch comprises a first pouch body and a second pouch body connected to each other, and a first cavity is recessed in the first pouch body away from the second pouch body;
the second pouch body covers the first cavity so that the first pouch body and the second pouch body jointly close around to form the accommodation cavity; or, a second cavity is recessed in the second pouch body away from the first pouch body, the second cavity communicates with the first cavity to form the accommodation cavity, and a depth of the second cavity is less than a depth of the first cavity along a direction from the first pouch body to the second pouch body;
the first pouch body comprises a first wall portion oriented toward the second pouch body, the first wall portion comprises a first wall face oriented toward the accommodation cavity and a third wall face oriented away from the accommodation cavity, and a thickness of the first wall portion is H1 along a direction from the third wall face to the first wall face; and
the second pouch body comprises a second wall portion oriented toward the first pouch body, the second wall portion comprises a second wall face oriented toward the accommodation cavity and a fourth wall face oriented away from the accommodation cavity, and a thickness of the second wall portion is H2 along a direction from the second wall face to the fourth wall face, satisfying: H2 < H1.

2. The pouch according to claim 1, **characterized in that**,
the first wall portion comprises a first sealing layer, a first metal layer, and a first protection layer disposed sequentially along a direction from the first sealing layer to the third wall face, and a thickness of the first sealing layer is t1; and
the second wall portion comprises a second sealing layer, a second metal layer, and a second protection layer disposed sequentially along a direction from the second sealing layer to the fourth wall face, and a thickness of the second sealing layer is t2, satisfying: t2 < t1.

3. The pouch according to claim 2, **characterized in that** the thicknesses satisfy: t2 = (0.2 to 0.8) × t1.

4. The pouch according to claim 2, **characterized in that** the first protection layer is connected to the second protection layer, and the first metal layer is connected to the second metal layer; and
the first sealing layer is connected to the second sealing layer, and a junction between the first sealing layer and the second sealing layer satisfies one of the following conditions:
a) the junction is in a step shape descending from the first sealing layer toward the second sealing layer;
b) the junction is in a slope shape descending from the first sealing layer toward the second sealing layer; or
c) the junction is in an arc shape that connects the first sealing layer and the second sealing layer.

5. The pouch according to claim 2, **characterized in that** the first pouch body comprises a first extension portion obtained by extending the first pouch body from one end of the first wall portion toward the second pouch body, and the first extension portion is connected to a surface of the second wall portion, the surface being away from the accommodation cavity.

6. The pouch according to claim 5, **characterized in that**,
at an end of the second wall portion, the end being close to the first extension portion, a length of the second protection layer is less than a length of the second metal layer, and a first notch is formed at an end of the second wall portion by the second metal layer and the second protection layer jointly; and
the first extension portion extends to the first notch, and, at the first notch, the first sealing layer of the first extension portion is connected to the second metal layer of the second wall portion in a stacked manner.

7. The pouch according to claim 6, **characterized in that**, at the first notch, along a direction from the first sealing layer to the second protection layer:
a width of the stacked connection between the first sealing layer and the second metal layer is W1, satisfying: W1 ≤ 1.2 mm;
a width of the first notch is W2, satisfying: W2 = W1 + (0.5 to 1) mm; and
the accommodation cavity of the pouch is configured to accommodate an electrode assembly, and, in a state in which the electrode assembly is accommodated in the pouch, a clearance exists between the first extension portion and the electrode assembly, and a width of the clearance is W3, satisfying: W2 ≤ W3.

8. The pouch according to claim 2, **characterized in that**,
the accommodation cavity of the pouch is configured to accommodate the electrode assembly, and a tab is connected to the electrode assembly;
the first pouch body comprises a first extension portion obtained by extending the first pouch body from one end of the first wall portion toward the second pouch body, and the second pouch body comprises a second extension portion obtained by extending the second pouch body from one end of the second wall portion toward the first pouch body; and
both the first extension portion and the second extension portion extend to a side of the electrode assembly, the side being away from the tab; and, the first extension portion is connected to the second extension portion on the side of the electrode assembly, the side being away from the tab.

9. An electrochemical device, **characterized in that** the electrochemical device comprises the pouch according to any one of claims 1 to 8.

10. An electronic device, **characterized in that** the electronic device comprises the electrochemical device according to claim 9.
